# EUROPEAN PATENT APPLICATION

(11) **EP 4 131 163 A1**
(43) Date of publication of application: **08.02.2023**
(21) Application number: 21779410.6
(22) Date of filing: 26.03.2021
(51) Int. Cl.: G06T 7/20, H04N 7/18, G01S 17/04, G01S 17/08, G01S 17/894

(54) **INFORMATION PROCESSING METHOD, PROGRAM, AND INFORMATION PROCESSING SYSTEM**

(30) Priority: 31.03.2020 JP 2020064779
(71) Applicant: Nuvoton Technology Corporation Japan, Nagaokakyo-shi, Kyoto 617-8520 (JP)
(72) Inventor: NAKAHARA, Mitsuya, Nagaokakyo-shi Kyoto, 6178520 (JP)
(74) Representative: Novagraaf International SA
(86) International application number: PCT/JP2021/013000
(87) International publication number: WO 2021/200699

(57) **Abstract**

The problem to be overcome by the present disclosure is to provide an information processing method, a program, and an information processing system, all of which make it easier to improve the accuracy of a decision about stay of a target. An information processing method includes a detection step (S12) including detecting a target based on a distance image of a monitoring region; and a stay decision step (S14) including making a stay decision. The stay decision includes determining whether any stay of the target has occurred. The stay decision step (S14) includes making the decision based on an index indicating a positional change of the target with the passage of time.

## Description

### Technical Field

The present disclosure generally relates to an information processing method, a program, and an information processing system, and more particularly relates to a method, program, and system for processing image-related information.

### Background Art

Patent Literature 1 discloses a method for detecting an object left behind in a scene. According to the method of Patent Literature 1, an object left behind in a scene is detected by updating a set of background models using a sequence of images that have been captured with a camera with respect to the scene. Each of the background models is updated in any one of multiple different time scales that range from a short-term one through a long-term one. After the background models have been updated, a foreground mask is determined based on each of the background models with respect to a particular one of the images in the sequence. A motion image is updated based on a set of foreground masks. In the motion image, respective pixels thereof have evidence values which are related to each other. Each of the evidence values is compared with an evidence threshold value, thereby detecting the object left behind in the scene and making notification.

### Citation List

### Patent Literature

Patent Literature 1: JP 2008-257693 A

### Summary of Invention

According to Patent Literature 1, background models are used, and therefore, there may be some detection errors. In addition, according to Patent Literature 1, a two-dimensional image captured with a camera is used, thus making it difficult to improve the accuracy of a decision to be made about an object (target).

The problem is to provide an information processing method, a program, and an information processing system, all of which make it easier to improve the accuracy of a decision about stay of a target.

An information processing method according to an aspect of the present disclosure includes: a detection step including detecting a target based on a distance image of a monitoring region; and a stay decision step including making a stay decision. The stay decision includes determining whether any stay of the target has occurred. The stay decision step includes making the decision based on an index indicating a positional change of the target with passage of time.

A program according to another aspect of the present disclosure is designed to cause one or more processors to perform the information processing method described above.

An information processing system according to still another aspect of the present disclosure includes: a detector that detects a target based on a distance image of a monitoring region; and a stay decider that makes a stay decision including determining whether any stay of the target has occurred. The stay decider makes the decision based on an index indicating a positional change of the target with passage of time.

### Brief Description of Drawings

FIG. 1 is a flowchart of an information processing method according to an exemplary embodiment;
FIG. 2 is a block diagram of an overall system including an information processing system that performs the information processing method;
FIG. 3 is a flowchart concerning stay decision of the information processing method;
FIG. 4 is an exemplary image to illustrate the stay decision;
FIG. 5 is another exemplary image to illustrate the stay decision;
FIG. 6 is still another exemplary image to illustrate the stay decision;
FIG. 7 is yet another exemplary image to illustrate the stay decision;
FIG. 8 is yet another exemplary image to illustrate the stay decision;
FIG. 9 illustrates how to make the stay decision;
FIG. 10 is a flowchart concerning irregular movement decision of the information processing method;
FIG. 11 is yet another exemplary image to illustrate the stay decision;
FIG. 12 is a flowchart concerning entry decision of the information processing method;
FIG. 13 is an exemplary image to illustrate the entry decision;
FIG. 14 is another exemplary image to illustrate the entry decision;
FIG. 15 is a flowchart concerning correlation decision of the information processing method;
FIG. 16 is an exemplary image to illustrate the correlation decision; and
FIG. 17 is another exemplary image to illustrate the correlation decision.

### Description of Embodiments

### (1) Embodiment

### (1-1) Overview

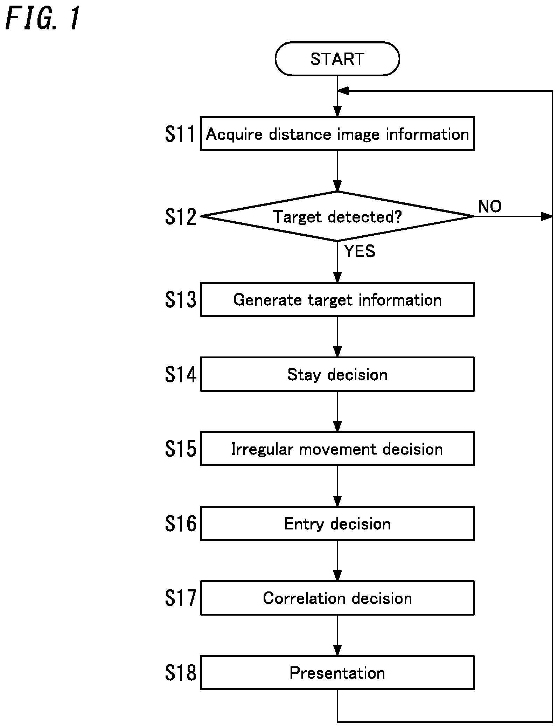

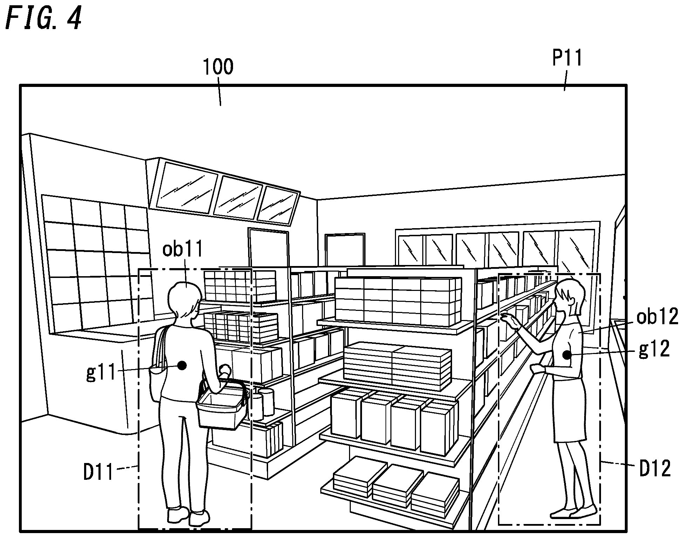

An information processing method according to an exemplary embodiment may be used to make a decision about an object ob11, ob12 (see FIG. 4) in a monitoring region 100 (see FIG. 4) in a facility such as a convenience store. As shown in FIG. 1, an information processing method according to this embodiment includes a detection step S12 including detecting a target D11, D12 (see FIG. 4) based on a distance image of the monitoring region 100; and a stay decision step S14 including making a stay decision. The stay decision includes determining whether any stay of the target D11, D12 has occurred. The stay decision step S14 includes determining, based on an index indicating a positional change of the target D11, D12 with the passage of time, whether any stay of the target D11, D12 has occurred.

In the information processing method according to this embodiment, a target present in a monitoring region is detected using a distance image and a determination is made, based on an index indicating a positional change of the target with the passage of time, whether any stay of the target has occurred. This enables, unlike a situation where a two-dimensional image is simply used, determining, based on the positional change with time of the target in a three-dimensional space, whether any stay of the target has occurred. Thus, the information processing method according to this embodiment makes it easier to improve the accuracy of a decision about the stay of a target.

### (1-2) Details

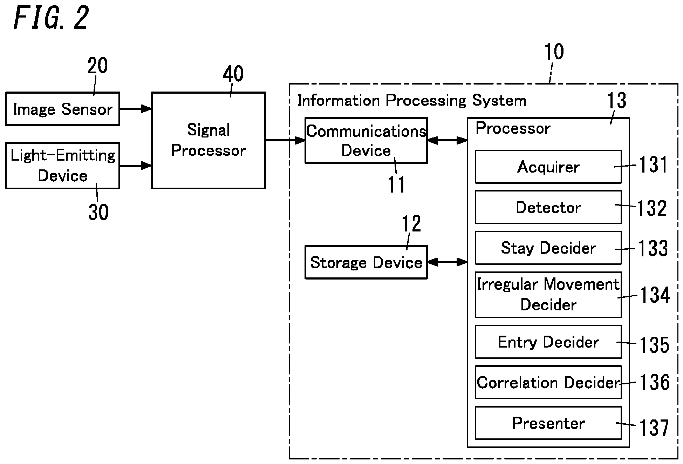

Next, an information processing method according to this embodiment will be described in further detail with reference to FIGS. 1-17. The information processing method according to this embodiment may be performed by an information processing system 10 shown in FIG. 2.

The information processing system 10 is connected to an image sensor 20 and a light-emitting device 30 via a signal processor 40. Specifically, the image sensor 20 and the light-emitting device 30 are both connected to the signal processor 40. The signal processor 40 is connected to the information processing system 10.

The image sensor 20 is an element with a plurality of pixels. The image sensor 20 has light coming from a subject imaged through an optical system onto a photosensitive plane, on which the plurality of pixels are arranged, photoelectrically converts the bright and dark pattern, formed by the incoming light, into a quantity of electrical charge, and reads out and outputs the electrical charge as an electrical signal. In this embodiment, the image sensor 20 may be, for example, a solid-state image sensor that uses a semiconductor element.

The image sensor 20 has a first pixel and a second pixel. The first pixel has sensitivity to visible light. The second pixel has sensitivity to infrared light. The image sensor 20 has a plurality of first pixels and a plurality of second pixels. The plurality of first pixels are arranged two-dimensionally. The plurality of first pixels may be arranged, for example, in a matrix pattern. The plurality of second pixels are also arranged two-dimensionally. The plurality of second pixels may be arranged, for example, in a matrix pattern.

The "visible light" as used herein means an electromagnetic wave, of which the wavelength falls within the visible range to human eyes, i.e., a visible light ray. The lower limit of the wavelength of the visible light falls within the range from approximately 360 nm to approximately 400 nm. The upper limit of the wavelength of the visible light falls within the range from approximately 760 nm to approximately 830 nm. The first pixel has sensitivity to light (visible light) falling within such a wavelength range. In this embodiment, the first pixel is supposed to have sensitivity to substantially the entire wavelength range of the visible light.

The "infrared light" as used herein means an electromagnetic wave having a wavelength longer than that of visible red light but shorter than that of radio waves, namely, an infrared ray. Thus, the lower limit of the wavelength of the infrared light falls within the range from approximately 760 nm and approximately 830 nm. The upper limit of the wavelength of the infrared light falls within the range from approximately 2.5 µm (near infrared) to 4.0 µm (mid-infrared). The second pixel has sensitivity to light (infrared light) falling within such a wavelength range. In this embodiment, the second pixel is supposed to have sensitivity to around a center wavelength of the light emitted from the light-emitting device 30.

In this embodiment, as an example, the number of the first pixels is supposed to be the same as the number of the second pixels. However, this is only an example and should not be construed as limiting. Alternatively, the number of the first pixels and the number of the second pixels in the image sensor 20 may also be different from each other.

In this embodiment, an infrared cut filter for cutting off the infrared light is disposed, for example, on the front surface of the first pixels. However, the infrared cut filter is not an essential constituent element but may be omitted as appropriate.

The light-emitting device 30 is arranged, along with the image sensor 20, to face toward the monitoring region 100. The light-emitting device 30 emits light toward at least the monitoring region 100. The light-emitting device 30 emits at least light, of which the wavelength falls within the wavelength range to which the second pixel of the image sensor 20 has sensitivity, i.e., emits infrared light. As the light-emitting device 30, an element having a relatively high response speed and enabling quick modulation (flickering at short intervals) such as a light-emitting diode (LED) or a laser diode may be used.

Using such a light-emitting device 30 in combination with the image sensor 20 allows information (distance information) about the distance to an object (e.g., the object ob11, ob12 shown in FIG. 4) present in the monitoring region 100 to be obtained by the time-of-flight (ToF) method. That is to say, the time that has passed since the light-emitting device 30 emitted light and until the light emitted from the light-emitting device 30 and reflected from the object is received at a second pixel of the image sensor 20 varies according to the distance from the image sensor 20 to the object. Measuring the time of flight of the light (e.g., the infrared light in this example) either directly or indirectly based on the exposure dose or phase shift, for example, by utilizing this enables measuring the distance to the object that has reflected the light.

The signal processor 40 reads out an electrical signal from the image sensor 20 and performs various types of signal processing such as filtering on the electrical signal thus read. In addition, the signal processor 40 also has the capability of controlling the light-emitting device 30 and causes the light-emitting device 30 to emit light at an arbitrary timing.

The signal processor 40 generates first luminance information, second luminance information, and distance information based on the electrical signal read out from the image sensor 20.

The first luminance information is information about a pixel value of a first pixel and is generated based on an electrical signal read out from the first pixel. As described above, a plurality of first pixels are arranged two-dimensionally. Thus, the first luminance information forms an image (luminance image) that is a set of respective outputs of the plurality of first pixels.

In this embodiment, the first pixel has sensitivity to substantially the entire wavelength range of visible light as described above. Thus, as long as the wavelength of incoming light falls within the visible light wavelength range, the first pixel basically provides output corresponding to the intensity of the incoming light, no matter what color the incoming light has. That is to say, the first luminance information provided by the first pixel is bright and dark information representing the intensity of the light that has been incident on the first pixel. Optionally, color image information may be acquired as the first luminance information by providing RGB color filters for the respective first pixels.

The second luminance information is information about a pixel value of a second pixel and is generated based on an electrical signal read out from the second pixel. As described above, a plurality of second pixels are arranged two-dimensionally. Thus, the second luminance information forms an image (luminance image) that is a set of respective outputs of the plurality of second pixels.

The distance information is information about the distance from the image sensor 20 to the object that has reflected the infrared light and is generated based on an electrical signal read out from a second pixel. As described above, a plurality of second pixels are arranged two-dimensionally. Thus, the distance information forms an image (distance image) that is a set of respective outputs of the plurality of second pixels.

Next, specific processing for obtaining the distance information (distance image) will be described briefly by taking, as an example, a method for measuring the time of flight indirectly based on a phase shift of light (i.e., a phase shift TOF method). In this embodiment, to measure the time it takes for the projected light (emitted light) to be received, the signal processor 40 makes the light-emitting device 30 emit light with a modulated intensity (hereinafter referred to as "intensity-modulated light") toward the monitoring region 100. On this premise, the signal processor 40 measures the time based on the phase difference between the phase of the intensity variation when the image sensor 20 receives the light and the phase of the intensity variation when the light-emitting device 30 projected the light. If the frequency of the intensity variation of the intensity-modulated light is constant, then the phase difference may be converted into the distance to the object by relatively simple calculation.

Specifically, suppose that intensity modulated light with varying intensities is projected from the light-emitting device 30 toward the monitoring region 100 and the intensity of the light received at one of the second pixels of the image sensor 20 varies. A time lag of the same phase reflects the distance to the object. Thus, the distance L to the object is given by L = c·Δt/2, where c [m/s] is the speed of light and Δt [s] is the time lag. Also, the time lag Δt is given by Δt = ϕ/2πf, where f [Hz] is the frequency of a modulation signal that modulates the intensity of the light and ϕ [rad] is the phase difference.

Thus, the distance L to the object may be obtained by obtaining the phase difference ϕ. To obtain the phase difference ϕ, the received light intensity may be obtained with respect to multiple different phases of the modulation signal on each second pixel of the image sensor 20. Actually, with respect to each second pixel of the image sensor 20, the quantity of received light in each phase interval having a predetermined phase width (time width) is detected and received light output corresponding to the quantity of the received light is used to calculate the phase difference ϕ. For example, if the phase intervals are defined every 90 degrees, then four phase intervals, which have the same phase lag between themselves, are obtained periodically per cycle of the modulation signal. In that case, the phase difference ϕ is given by ϕ = tan⁻¹ {(C0 - C2)/(C1 - C3)}, where C0-C3 are respective quantities of received light in the four phase intervals. Even though the sign of the phase difference ϕ changes depending on the correspondence between the quantities of the received light C0-C3 and the phases of the modulation signal, its absolute value may be used as the phase difference ϕ.

The signal processor 40 supplies a modulation signal to the light-emitting device 30 and thereby drives the light-emitting device 30 to cause the light-emitting device 30 to project such intensity modulated light. Received light outputs, respectively corresponding to the quantities of received light C0-C3 in the four phase intervals, are obtained from the image sensor 20. These received light outputs (electrical signals) of the image sensor 20 are supplied to the signal processor 40. The signal processor 40 calculates the distance to the object based on these received light outputs. At this time, the signal processor 40 reads out the received light outputs by supplying, to the image sensor 20, a readout signal that has been generated based on a reference signal synchronized with the modulation signal.

As described above, the information processing system 10 is connected to the image sensor 20 via the signal processor 40. Thus, the information processing system 10 acquires the luminance images (first luminance information and second luminance information) and the distance image (distance information) from the image sensor 20 via the signal processor 40. That is to say, according to this embodiment, the information processing system 10 acquires the luminance images and the distance image from the image sensor 20 not directly but indirectly via the signal processor 40.

The information processing system 10 includes a communications device 11, a storage device 12, and a processor 13 as shown in FIG. 2.

The communications device 11 may be connected to a communications network and has the capability of establishing communication via the communications network. The information processing system 10 is connected via the communications device 11 to the signal processor 40 to be ready to communicate with the signal processor 40. The communications device 11 is compliant with a predetermined communications protocol. The predetermined communications protocol may be selected from various known wired and wireless communications protocols.

The storage device 12 is used to store information to be used by the processor 13 and information generated by the processor 13. The storage device 12 includes one or more storage devices. Examples of the storage devices include a random-access memory (RAM).

The processor 13 is configured to perform overall control on the information processing system 10, i.e., to control the communications device 11 and the storage device 12. The processor 13 may be implemented as a computer system including one or more processors (microprocessors) and one or more memories. In other words, the functions of the processor 13 are performed by making the one or more processors execute one or more (computer) programs (applications) stored in the one or more memories. In this embodiment, the program is stored in advance in the memory of the processor 13. Alternatively, the program may also be downloaded via a telecommunications line such as the Internet or distributed after having been stored in a non-transitory storage medium such as a memory card.

The processor 13 includes an acquirer 131, a detector 132, a stay decider 133, an irregular movement decider 134, an entry decider 135, a correlation decider 136, and a presenter 137 as shown in FIG. 2. In FIG. 2, none of the acquirer 131, the detector 132, the stay decider 133, the irregular movement decider 134, the entry decider 135, the correlation decider 136, and the presenter 137 have a substantive configuration. Rather, these constituent elements 131-137 represent respective functions performed by the processor 13.

The acquirer 131 acquires the luminance images (first luminance information and second luminance information) and the distance image (distance information) from the image sensor 20. In this embodiment, the acquirer 131 acquires the luminance images (first luminance information and second luminance information) and the distance image (distance information) indirectly via the signal processor 40.

The detector 132 detects a target based on the distance image of the monitoring region. In this embodiment, the detector 132 performs coordinate transformation processing on the distance image to transform the coordinate system thereof into an X, Y, and Z orthogonal coordinate system. Specifically, the detector 132 generates, based on the distance image, a point cloud (point cloud data) having X, Y, and Z coordinate values. In addition, the detector 132 also separates an object and a surrounding region surrounding the object from each other. As used herein, the "surrounding region" may refer to, for example, the road surface, the ground surface, the floor surface, and other regions to be excluded from the target of detection when it is determined whether any object is present. In other words, the detector 132 separates a region covering the object and excluding the floor surface, for example, and the surrounding region such as the floor surface from each other. The detector 132 separates the object and the surrounding region from each other with respect to the distance image (point cloud) that has been subjected to the coordinate transformation. In this embodiment, the detector 132 extracts, first, a component corresponding to the surrounding region from the distance image that has been subjected to the coordinate transformation. Next, the detector 132 extracts a component, corresponding to the object, of the distance image by removing the surrounding region thus extracted from the distance image that has been subjected to the coordinate transformation. As used herein, the surrounding region refers to the entire region, other than the object, of the distance image and includes not only a region near the object but also a region distant from the object. The detector 132 determines, based on the distance image from which the surrounding region has been removed, whether there is any object in the monitoring region and outputs, if a decision has been made that there should be an object, a distance image (point cloud) corresponding to the object as a "target."

For example, the detector 132 determines, with respect to the distance image (point cloud) and based on the density of points of the point cloud, whether any object is present. When finding the density of points of the point cloud equal to or greater than a threshold value, the detector 132 decides that an object should be present at a location corresponding to these points. On the other hand, when finding the density of points of the point cloud less than the threshold value, the detector 132 decides that no objects should be present at a location corresponding to these points. In addition, the detector 132 may also perform, for example, clustering to classify the plurality of points falling within the predetermined range into multiple groups and may determine, based on the size (i.e., the area) of a plane including a plurality of points in the same group, whether there is any object. In this case, when finding the area equal to or greater than a threshold value, the detector 132 decides that an object should be present at a location corresponding to these points. On the other hand, when finding the area less than the threshold value, the detector 132 decides that no object should be present at a location corresponding to these points. Optionally, the detector 132 may also detect an object based on the distance image by using, for example, histograms of oriented gradients (HOG) feature quantity or a convolutional neural network (CNN).

In addition, the detector 132 makes decisions about not only the presence or absence of any object (target) but also information (such as three-dimensional coordinates) about the object's (target's) location in the monitoring region, information about the object's (target's) attributes, and information about the object's (target's) center of gravity position (e.g., center of gravity coordinates). As used herein, the "attributes" may include the type of the object, namely, whether the object is a person, or whether the object is a mover (such as a person, an automobile, or a bicycle) or a fixed object. As for a facility, examples of the fixed object include fixtures, shelves, electrical equipment, and furniture. As for a road, on the other hand, examples of the fixed object include roadside trees, traffic lights, and guardrails. The object's "attributes" include the object's dimensions and colors. Furthermore, if the object is a person, then the object's "attributes" also include his or her gender, height, shape, and age group, for example.

In this embodiment, the detector 132 makes a list of targets detected. More specifically, when detecting a target, the detector 132 assigns a detection ID as identification information to the target thus detected and registers the target on the list of targets detected. In this manner, the detector 132 manages a plurality of targets. The detector 132 also tracks the object (target) present in the monitoring region. The detector 132 tracks the object by comparing the results of detection (about the target) between, for example, a plurality of frames of the output of the image sensor 20. This allows the detector 132 to recognize, even if the object is moving within the monitoring region 100, the object that has not moved yet and the object that has moved as the same object. The detector 132 assigns the same detection ID to the same object (target) between the plurality of frames. In that case, the detection ID assigned to the object (target) is already included in the list of detection IDs, and therefore, a result of detection is added with respect to the detection ID already included in the list of detection IDs. On the other hand, as for objects (targets) which are not the same between a plurality of frames, the detector 132 assigns different detection IDs thereto. In that case, the detection ID assigned to the object (target) is not included in the list of detection IDs, and therefore, a result of detection is registered, along with a new detection ID, on the list of detection IDs. Optionally, an upper limit may be set for the number of detection IDs that may be registered on the list of targets detected. That is to say, in a situation where the number of detection IDs registered on the list of targets detected has already reached the upper limit, the detector 132 does not add the result to the list of targets detected, even if there is any newly detected target. Alternatively, to cut down the size of the information about the results of detection, the detector 132 may avoid adding the result to the list of targets detected as for a target that satisfies a predetermined condition. Examples of the predetermined condition include a condition that the velocity of the target is less than, or equal to or greater than, a prescribed value. The prescribed value may be set at any of various values, but may be set at, for example, 0.3 m/s. That is to say, a given target may or may not be registered on the list of targets detected depending on whether the target is moving. Optionally, as for a target that was detected at least a prescribed amount of time ago, the detector 132 may remove such a target from the list of targets detected.

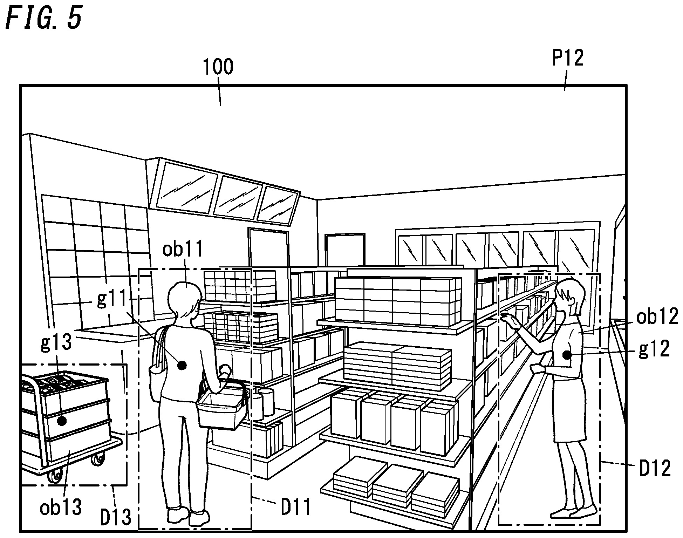

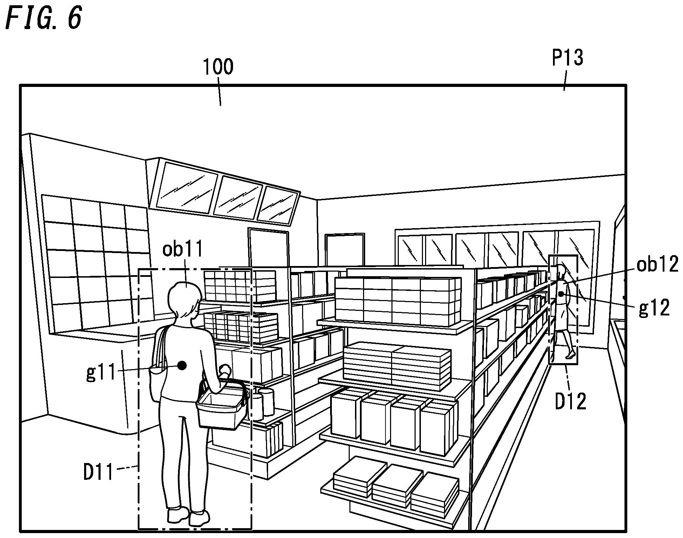

Next, it will be described briefly with reference to FIGS. 4-6 how the detector 132 operates. FIGS. 4-6 show an exemplary set of images (luminance images) of the monitoring region 100. In the image P11 shown in FIG. 4, the monitoring region 100 is set inside a store such as a convenience store. In the monitoring region 100, there are two objects ob 11, ob12 that are persons. In that case, the detector 132 detects targets D11, D12 corresponding to the objects ob11, ob12, respectively, and creates, with respect to each of the targets D11, D12, information about its location, information about its attributes, and information about its center of gravity position g11, g12. Then, the detector 132 assigns a detection ID to each of the targets D11, D12 and registers the detection IDs on the list of targets detected. In the image P12 shown in FIG. 5, not only the objects ob11, ob12 that are persons but also an object ob13 that represents goods are present in the monitoring region 100. In that case, the detector 132 detects targets D11, D12, and D13 corresponding to the objects ob11, ob12, and ob13, respectively, and creates, with respect to each of the targets D11, D12, and D13, information about its location, information about its attributes, and information about its center of gravity position. Since detection IDs have already been assigned to the targets D11, D12, the detector 132 assigns a detection ID to only the target D13 and newly registers the target D13 on the list of targets detected. In the image P13 shown in FIG. 6, the objects ob11, ob12 that are persons are still present in the monitoring region 100. In this case, the detector 132 detects the targets D11, D12 corresponding to the objects ob11, ob12, respectively, and creates, with respect to each of the targets D11, D12, information about its location, information about its attributes, and information about its center of gravity position. Meanwhile, since the target D13 is no longer detected, the detector 132 removes the detection ID corresponding to the target D13 from the list of targets detected.

The result of detection obtained by the detector 132 is provided as target information for the stay decider 133, the irregular movement decider 134, the entry decider 135, and the correlation decider 136.

The stay decider 133 makes a stay decision (S14). The stay decision includes determining, based on an index indicating a positional change of the target with the passage of time, whether any stay of the target has occurred. As used herein, "stay" refers to not only a situation where the target stays at quite the same location but also a situation where the target stays at almost the same location. The target's stay may be used to, for example, determine in what section of a store a person has stayed. In this embodiment, the index indicating the positional change of a target with the passage of time includes the velocity of the target. That is to say, the stay decider 133 determines, based on the velocity of the target, whether the target has stayed. Optionally, indices indicating the positional change of a target with the passage of time may also include the area of the corner through which the target has passed within the monitoring region 100, the size of an overlapping part of the target between the last time and this time, and the positional change (e.g., change of the center of gravity position) itself of the target.

The stay decision includes a decision about the degree of the target's stay. As used herein, the "degree of the target's stay" is an index indicating how long the target's stay has lasted. The degree of the target's stay may be either the duration for which the target's stay has lasted or a value (level) associated with the duration of the target's stay. The degree of the target's stay may be used, when a person's stay has occurred around a product in a store, for example, to determine whether he or she has just stopped there or watched the product closely with interest. In addition, the target's stay and its degree may also be used to determine whether he or she has moved back and forth between similar products and what product has made him or her stay for the longest time. If the target's stay has lasted for a long time, a prolonged stay appears to have occurred. The prolonged stay may be used, for example, to detect a suspicious person who stays at the same place for an unusually long time or to detect any object left behind. Examples of objects left behind include items left behind, lost items, suspicious items, and dropped items.

The stay decision includes a decision about any change in the target's posture. The decision about any change in the target's posture is made when the target's stay has occurred. Particularly when the target is a person, it is effective to make a decision about any change in the target's posture. The decision about any change in the target's posture includes estimating the target's posture based on the target's center of gravity height. The target's posture may be estimated based on not only the target's center of gravity height but also the target's shape as well. For example, if the target is a person, he or she may be standing upright, stooping, crouching, fallen, sitting (on a chair or a bed), or lying (on the floor, ground. or bed). On the other hand, if the target is an object, examples of its posture include chipping, damage, and deformation to be caused with the passage of time.

The stay decision includes a decision about the target's condition of interest. The decision about the target's condition of interest may be made when the target's stay has occurred. In this case, the condition of interest may be a condition different from the target's normal condition. Examples of the conditions of interest include an unconscious condition of a person who has fallen and is not moving, a condition of a person who is crouching because he or she is not feeling well, and a condition of a person who has not lost consciousness but is moving just slightly due to pain. The degree of urgency of the target's condition of interest may also be estimated based on the degree of stay when a decision is made that the target should be in such a condition of interest.

The stay decision includes determining, based on an index indicating the target's positional change with the passage of time, whether the target's stay has ended. It is determined whether the target's stay has ended in a situation where a decision is made that the target's stay has occurred. If the stay ends when a decision has been made that a prolonged stay should have occurred, then the prolonged stay should have ended. The end of the prolonged stay means that the object that has stayed for a long time has disappeared. Examples of the end of the prolonged stay include taking an object away, an object's dropping, and theft. Taking an object away refers to a situation where a person walks away while carrying the object with him or her and may refer to either a situation where the person is the owner of the object (recovery of the object) or a situation where the person is not the owner of the object (steal of the object). The object's dropping may refer to a situation where an object has dropped onto a railway or into a hole. The theft may be a theft of a moving vehicle such as a bicycle or an automobile.

The stay decision is made with respect to a target to which identification information (detection ID) is assigned. If a plurality of targets have been detected by the detector 132 and different detection IDs have been assigned to the plurality of targets, then the stay decision is made with respect to the plurality of targets.

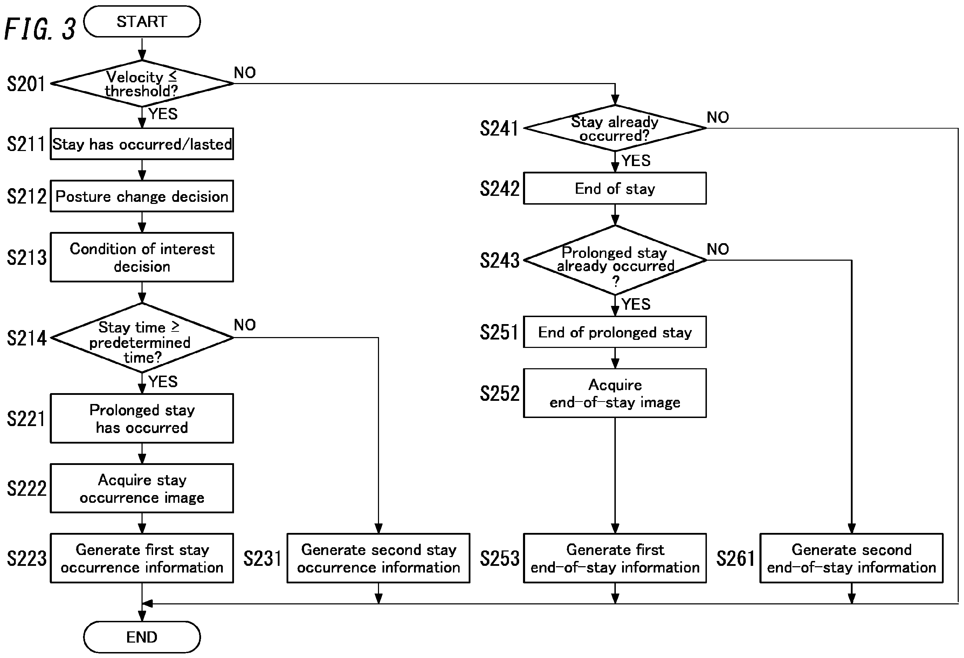

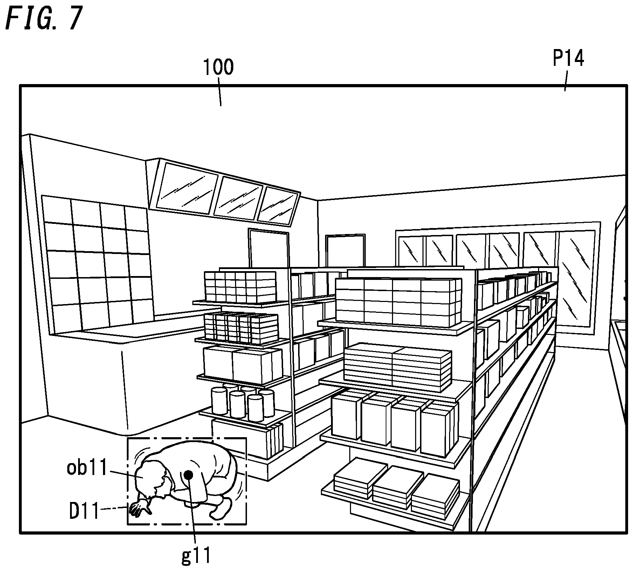

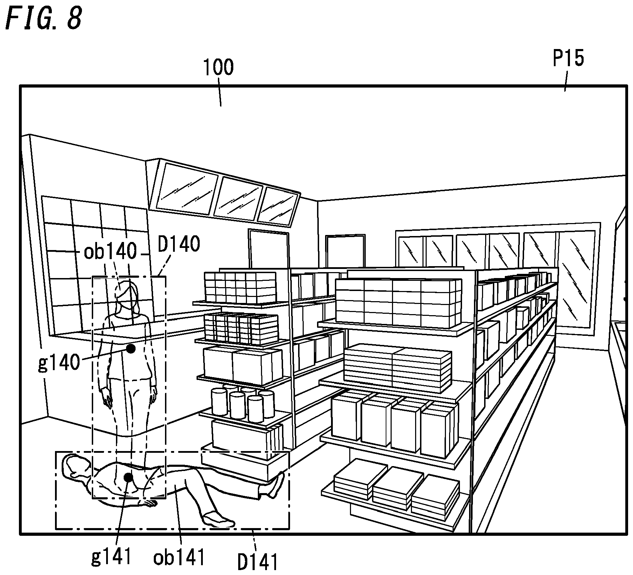

Next, it will be described with reference to FIGS. 3-9 how the stay decider 133 operates (i.e., how the stay decision step S14 is performed). The stay decision step S14 is performed when a target is detected by the detector 132. FIG. 3 is a flowchart showing how the stay decider 133 operates. FIGS. 7 and 8 are exemplary images (luminance images) of the monitoring region 100. In the images P14, P15 shown in FIGS. 7 and 8, the monitoring region 100 is set inside a store such as a convenience store. As for the image P14, a target D11 corresponding to an object ob11 that is a person has been detected and its center of gravity position g11 has been obtained by the detector 132. As for the image P15, a target D141 corresponding to an object ob141 that is a person has been detected and its center of gravity position g141 has been obtained by the detector 132. Note that in the image P15, an object ob140 is an object that has been detected by the detector 132 in an image preceding the image P15 and is the same as the object ob141. The target D140 is a target corresponding to the object ob140 and the center of gravity position g140 is the center of gravity position of the target D140.

When a target is detected by the detector 132, the stay decider 133 determines whether the target's velocity is equal to or less than a threshold value (in S201). For example, the stay decider 133 determines whether the velocity calculated based on the X-, Y-, and Z-axis coordinate information and time information of the target D11 is equal to or less than its corresponding threshold value. In this case, the X-axis is supposed to be an axis in the horizontal direction, the Y-axis is supposed to be an axis in the depth direction, and the Z-axis is supposed to be an axis in the vertical direction. When finding the velocity of the target D11 equal to or less than its corresponding threshold value, the stay decider 133 decides that the velocity of the target D11 should be equal to or less than the threshold value. In this case, each threshold value may be set as appropriate to determine whether the target D11 has stayed.

When finding the velocity of the target D11 equal to or less than the threshold value (if the answer is YES in S201), the stay decider 133 decides that the target D11 should be present at the same place (in S211). In this case, when finding for the first time that the target D11 is present at the same place (i.e., if the velocity of the target D11 that has been moving at a velocity equal to or greater than the threshold value has changed to a value equal to or less than the threshold value), the stay decider 133 decides that the stay of the target D11 should have occurred. On the other hand, to a target D11, of which the velocity is equal to or less than the threshold value in an initial state of the information processing system (e.g., right after the information processing system has been powered ON), the stay decider 133 does not assign any detection ID as identification information. The stay decider 133 regards a point in time corresponding to the image as a time when the stay has occurred. The stay decider 133 sets the stay duration at zero. When finding for the second time and on that the target D11 is still present at the same place, the stay decider 133 decides that the stay of the target D11 should have lasted. That is to say, when finding for the first time that the target D11 is present at the same place, the stay decider 133 decides that the stay should have occurred. When finding for the second time and on that the target D11 is still present at the same place, the stay decider 133 decides that the stay should have lasted. The stay decider 133 updates the stay time with the passage of time. The stay decider 133 determines the degree of stay. For example, the stay decider 133 classifies the degrees of stay into three levels, namely, Levels 1, 2, and 3. When finding the stay time less than a first duration, the stay decider 133 determines the degree of stay to be Level 1. When finding the stay time equal to or longer than the first duration but less than a second duration, the stay decider 133 determines the degree of stay to be Level 2. When finding the stay time equal to or longer than the second duration, the stay decider 133 determines the degree of stay to be Level 3. For example, the first duration may be about one second and the second duration may be one minute.

The stay decider 133 determines whether there is any change in posture (in S212). An exemplary decision about any change in posture will be described with reference to FIG. 8. When a decision is made about any change in the posture of the target D141, the center of gravity height of the target D141 has been obtained in advance, for example. The center of gravity height of the target D141 is defined by the center of gravity position of the target that is moving. In FIG. 8, the target D140 represents a state where the same object (person) as the target D141 is moving. As for the target D140, if the motion velocity of the target D140 is equal to or greater than a prescribed value, the center of gravity height of the target D140 is obtained based on the center of gravity position g140 of the target D140. The prescribed value may be, for example, 0.8 m/s. The center of gravity height would not change significantly while the target D140 is moving. Thus, the center of gravity height of the target D140 is determined based on an average over a predetermined time of the center of gravity position g140 while the target D140 is moving. The predetermined time may be one second, for example. The center of gravity height thus obtained for the target D140 is used as a reference center of gravity height for the target D141. Note that if the reference center of gravity height has not been obtained with respect to the target D141, then the decision about any change in posture (S212) is not made. The stay decider 133 determines, based on the center of gravity height obtained from the center of gravity position g141 of the target D141, the reference center of gravity height, and the shape of the target D141, whether the target has changed its posture. For example, when finding that the center of gravity height of the target D141 is less than 0.4 of the reference center of gravity height and that the target D141 has a laterally long shape, the stay decider 133 decides that the target D141 should be laying itself. For example, the target D141 shown in FIG. 8 represents a person lying faceup on the floor and the stay decider 133 decides that the target D141 should have the posture of lying. For example, when finding the center of gravity height of the target D141 is equal to or greater than 0.4 but less than 0.8 of the reference center of gravity height, the stay decider 133 decides that the target D141 should be stooping, irrespective of the shape of the target D141. For example, when finding the center of gravity height of the target D141 is equal to or greater than 0.8 of the reference center of gravity height, the stay decider 133 decides that the target D141 should be standing irrespective of the shape of the target D141.

The stay decider 133 makes a decision about a condition of interest (in S213). An exemplary decision about a condition of interest will be described with reference to FIG. 7. In this example, the condition of interest is writhing. The stay decider 133 calculates the distance from the image sensor 20 to the center of gravity position g 1 1 of the target D11. The stay decider 133 calculates an average over a predetermined time (of 5 seconds, for example) of the distance from the image sensor 20 to the center of gravity position g11 of the target D11. In addition, the stay decider 133 further calculates a standard deviation over a predetermined time (of 5 seconds, for example) of the distance from the image sensor 20 to the center of gravity position g11 of the target D11. Then, when finding the average of the standard deviation (e.g., an average over 10 seconds) equal to or greater than a prescribed value, the stay decider 133 decides that the target D11 should be in the condition of interest. For example, the target D11 shown in FIG. 7 corresponds to a writhing person. Thus, the stay decider 133 decides that target D11 should be in the condition of interest (i.e., writhing).

The stay decider 133 determines whether the stay time is equal to or longer than a predetermined time (in S214). When finding the stay time equal to or longer than the predetermined time (if the answer is YES in S214), the stay decider 133 decides that a prolonged stay of the target should have occurred (in S221). In this case, the predetermined time is supposed to be longer than the second duration. The predetermined time may be, for example, equal to or longer than one minute. Nevertheless, the predetermined time does not have to be determined in association with the second duration but may be determined independently.

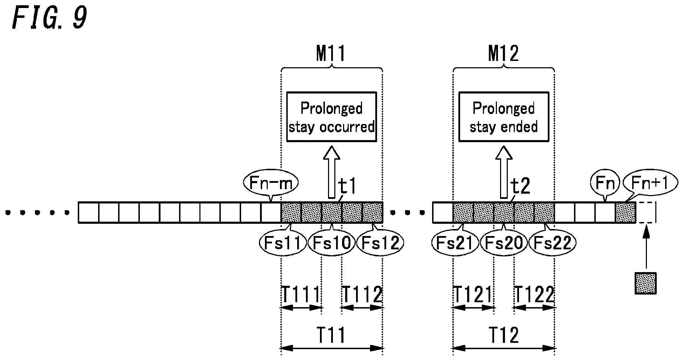

On confirming that a prolonged stay of the target D11 has occurred, the stay decider 133 acquires an image (frame) concerning the stay occurrence (in S222). For example, FIG. 9 illustrates a group of time-series images (luminance images) of the monitoring region 100. In this embodiment, the stay decider 133 acquires, from the group of time-series luminance images of the monitoring region 100, a stay occurrence moving picture M11, which is a moving picture as a group of luminance images (images Fs11-Fs12) included in the stay occurrence period T11. The stay occurrence period T11 is a period including a time t1 when the target's stay (e.g., prolonged stay in this embodiment) has occurred. In particular, the stay occurrence period T11 includes at least a period T111 preceding the point in time t1 when the target's stay (e.g., prolonged stay in this embodiment) has occurred. In this embodiment, the stay occurrence period T11 further includes a period T112 following the point in time t1 when the target's stay (e.g., prolonged stay in this embodiment) has occurred. In FIG. 9, the image Fs10 is a luminance image (first luminance image, second luminance image) corresponding to a distance image when the occurrence of the target's D13 prolonged stay has been confirmed. The image Fs11 is a luminance image corresponding to the beginning of the stay occurrence period T11. The image Fs11 is preferably an image captured before the target's prolonged stay has occurred and at least not representing a prolonged stay of the target. The image Fs12 is a luminance image corresponding to the end of the stay occurrence period T11. The image Fs12 is an image captured after the target's prolonged stay has occurred. Alternatively, the image Fs10 captured when the target's prolonged stay has occurred may be used as the image Fs12. That is to say, the stay occurrence period T11 does not have to include the period T112 following the point in time t1 when the target's stay (e.g., prolonged stay in this embodiment) has occurred. The stay occurrence period T11 needs to be long enough to confirm the occurrence of the target's prolonged stay. For example, the stay occurrence period T11 may have a length of about one minute. The stay decider 133 confirms, based on the result of the stay decision, that the target's stay has occurred to generate stay occurrence information (first stay occurrence information) (in S223). The first stay occurrence information is information about the stay occurrence period T11 including the time of occurrence of the target's stay. In this embodiment, the stay occurrence moving picture M11 is included in the first stay occurrence information. Optionally, the first stay occurrence information may include, as pieces of information about the target in the stay occurrence period T11, information about the target's coordinates in the stay occurrence period T11 and still pictures (image Fs11 and image Fs12) corresponding to the beginning and end of the stay occurrence period T11 or both the still pictures (image Fs11 and image Fs12) and a moving picture (stay occurrence moving picture M11).

When finding the stay time less than the predetermined time (if the answer is NO in S214), the stay decider 133 generates stay occurrence information (second stay occurrence information) about the occurrence of the target's stay (in S231). That is to say, the stay decider 133 confirms, based on a result of the stay decision, that the target's stay has occurred to generate the stay occurrence information (second stay occurrence information). In particular, the second stay occurrence information includes information indicating that the target's stay has occurred. Examples of such information indicating that the target's stay has occurred include coordinate information such as information about the target's center of gravity coordinates, a frame number concerning the occurrence of the target's stay (e.g., the frame number of an image captured before the target's stay has occurred), and an image concerning the occurrence of the target's stay (e.g., a luminance image captured when the occurrence of the target's stay is confirmed or an image captured before or after the occurrence of the target's stay). Optionally, the second stay occurrence information, as well as the first stay occurrence information, may also include a stay occurrence moving picture. That is to say, a stay occurrence moving picture may be generated, no matter whether the stay is a prolonged stay or not. The image concerning the target's stay may be a still picture, a moving picture, or a combination of a still picture and a moving picture. In the image concerning the target's stay, the target may be marked (e.g., with a rectangular frame that surrounds the target). Optionally, the marker may reflect the degree of the target's stay. For example, the degree of the target's stay may be reflected by the color of the marker.

If the velocity of the target D11 is not equal to or less than the threshold value (if the answer is NO in S201), the stay decider 133 decides that the target D11 should not be present at the same place. In this case, if the target's D11 stay has already occurred (if the answer is YES in S241), then the stay decider 133 decides that the target's D11 stay should have ended (in S242) and sees if this stay has been a prolonged stay (i.e., whether the target D11 has taken away anything) (in S243). That is to say, the stay decider 133 decides that the target D11 should have resumed moving. The stay decider 133 regards a time corresponding to the image as a time when the target D11 has resumed moving. The stay decider 133 regards the difference between the time when the target's D11 stay has occurred and the time when the target D11 has resumed moving as a final stay time.

In this case, if the target's D11 prolonged stay has already occurred (if the answer is YES in S243), then the stay decider 133 decides that the target's D11 prolonged stay should have ended (in S251). Then, the stay decider 133 acquires an image (frame) concerning the end of the stay (in S252). In this embodiment, the stay decider 133 acquires, from the group of time-series luminance images of the monitoring region 100, an end-of-stay moving picture M12, which is a moving picture as a group of luminance images (images Fs21-Fs22) included in the end-of-stay period T12. The end-of-stay period T12 is a period including a time t2 when the target's stay (e.g., prolonged stay in this embodiment) has ended. In particular, the end-of-stay period T12 includes at least a period T121 preceding the point in time t2 when the target's stay (e.g., prolonged stay in this embodiment) has ended. In this embodiment, the end-of-stay period T12 further includes a period T122 following the point in time t2 when the target's stay (e.g., prolonged stay in this embodiment) has ended. In FIG. 9, the image Fs20 is a luminance image (first luminance image, second luminance image) corresponding to a distance image when the end of the target's D13 prolonged stay has been confirmed. The image Fs21 is a luminance image corresponding to the beginning of the end-of-stay period T12. The image Fs21 is preferably an image captured before the target's prolonged stay has ended and at least representing a prolonged stay of the target. The image Fs22 is a luminance image corresponding to the end of the end-of-stay period T12. The image Fs22 is an image captured after the target's prolonged stay has ended. Alternatively, the image Fs20 captured when the target's prolonged stay has ended may be used as the image Fs22. That is to say, the end-of-stay period T12 does not have to include the period T122 following the point in time t2 when the target's stay (e.g., prolonged stay in this embodiment) has ended. The end-of-stay period T12 needs to be long enough to confirm the end of the target's prolonged stay. For example, the end-of-stay period T12 may have a length of about one minute. The stay decider 133 confirms, based on the result of the stay decision, that the target's stay has ended to generate end-of-stay information (first end-of-stay information) (in S253). The first end-of-stay information is information about the end-of-stay period T12 including the ending time of the target's stay. In this embodiment, the end-of-stay moving picture M12 is included in the first end-of-stay information. Optionally, the first end-of-stay information may include, as pieces of information about the target in the end-of-stay period T12, information about the target's coordinates in the end-of-stay period T12 and still pictures (image Fs21 and image Fs22) corresponding to the beginning and end of the end-of-stay period T12 or both the still pictures (image Fs21 and image Fs22) and a moving picture (end-of-stay moving picture M12).

If the target's D11 prolonged stay has not occurred yet (if the answer is NO in S243), the stay decider 133 generates end-of-stay information (second end-of-stay information) about the end of the target's D11 stay (in S261). That is to say, the stay decider 133 confirms, based on a result of the stay decision, that the target's stay has ended to generate the end-of-stay information (second end-of-stay information). The second end-of-stay information includes information indicating that the target's stay has ended. Examples of such information indicating that the target's stay has ended include coordinate information such as information about the target's center of gravity coordinates, a frame number concerning the end of the target's stay (e.g., the frame number of an image captured before the target's stay has ended), and an image concerning the end of the target's stay (e.g., an image captured when the end of the target's stay is confirmed or an image captured before or after the end of the target's stay). Optionally, the second end-of-stay information, as well as the first end-of-stay information, may also include an end-of-stay moving picture. That is to say, an end-of-stay moving picture may be generated, no matter whether the stay is a prolonged stay or not. The image concerning the end of the target's stay may be a still picture, a moving picture, or a combination of a still picture and a moving picture.

The irregular movement decider 134 determines, based on an index indicating a positional change of a target with the passage of time, whether any irregular movement of the target has occurred (i.e., makes an irregular movement decision in S15). If a target has moved in an irregular pattern, then the target may be in an abnormal condition, not a normal condition. If the target is a mover, then an irregular movement of the mover may be caused by some trouble. If the target is a person, then the irregular movement of the target may be used as an index to the person's condition. Examples of a person's irregular movement include staggering and wobbling. That is to say, if a person is standing but moving irregularly to the right and to the left, then he or she would be staggering or wobbling. A person who is staggering or wobbling would not be in a normal condition but would be in an abnormal condition. Examples of such abnormal conditions include a drunken condition, a condition of a person whose muscular strength has declined in the lower part of his or her body, and a condition of a person who is not feeling well (e.g., dizzy). If a person is moving in such an abnormal condition, then there is a risk that he or she may face a dangerous situation. For example, a person in such a condition may happen to fall down onto a railway, run out into a traffic lane, or collide against a wall, for instance. Thus, if such an irregular movement of a person has occurred, it is useful to arouse his or her attention. Optionally, the degree of the abnormal condition may be evaluated based on the degree of staggering or wobbling.

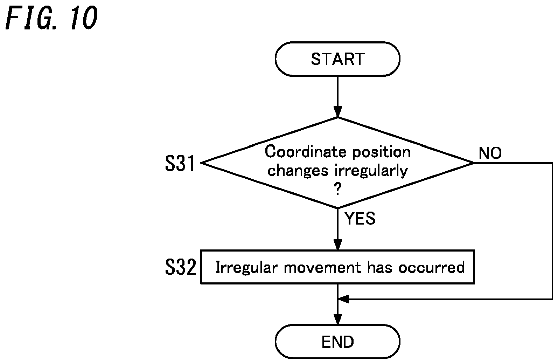

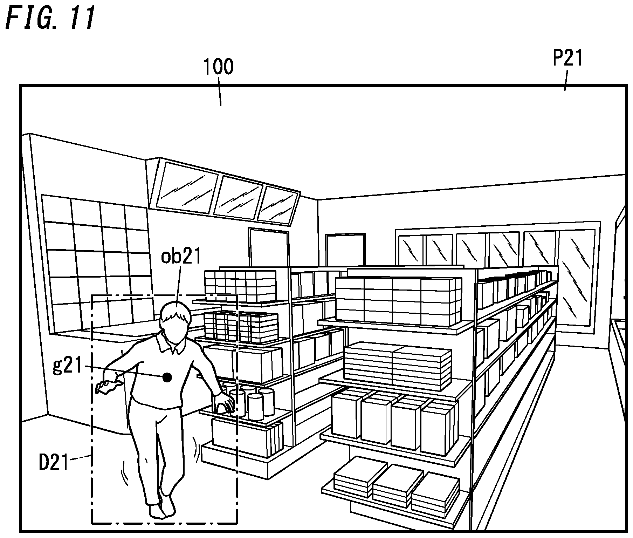

Next, it will be described with reference to FIGS. 10 and 11 how the irregular movement decider 134 operates (i.e., how to perform the irregular movement decision step S15). FIG. 10 is a flowchart showing how the irregular movement decider 134 operates (i.e., how to perform the irregular movement decision step S15). FIG. 11 illustrates an image (luminance image) P21 of the monitoring region 100. As for the image P21, a target D21 corresponding to an object ob21 that is a person has been detected, and its center of gravity position g21 has been obtained, by the detector 132. As shown in FIG. 10, when the target D21 is detected by the detector 132, the irregular movement decider 134 determines whether the variation in the coordinate position of the target D21 is irregular (in S31). For example, the irregular movement decider 134 calculates the angle of a velocity vector of the target D21 on an XY plane. In this example, the X-axis is supposed to be an axis in the horizontal direction and the Y-axis is supposed to be an axis in the depth direction. Then, the irregular movement decider 134 calculates the difference between the angles of the velocity vector. For example, the irregular movement decider 134 may calculate the difference between the angle of the velocity vector calculated this time and the angle of the velocity vector calculated last time. The irregular movement decider 134 obtains, as a first decision value, an average over a predetermined time (e.g., one second) of the differences in the angles of velocity vectors. In addition, the irregular movement decider 134 also obtains standard deviations of the distance traveled by the target D21 over a predetermined time (e.g., one second) and further calculates, as a second decision value, the average of the standard deviations. When finding the first decision value equal to or greater than a first threshold value and the second decision value equal to or greater than a second threshold value, the irregular movement decider 134 decides that the variation in the coordinate position of the target D21 should be an irregular one. In this case, the first threshold value and the second threshold value may be set as appropriate to determine whether the variation in the coordinate position of the target D21 is an irregular one. When finding the variation in the coordinate position of the target D21 an irregular one (if the answer is YES in S31), the irregular movement decider 134 decides that an irregular movement of the target D21 should have occurred (in S32).

The entry decider 135 makes a decision about the entry of a target into an area of interest within the monitoring region (i.e., performs the entry decision step S16 shown in FIG. 1). In this embodiment, the entry decider 135 determines the chances of a target entering the area of interest within the monitoring region. Alternatively, the entry decider 135 may determine whether the target has entered the area of interest within the monitoring region. As used herein, the "area of interest" refers to an area, where the entry of a target needs to be detected, within the monitoring region. The area of interest may be an area that the target should enter or an area that the target should not enter, whichever is appropriate. If the monitoring region is set inside a store, the area of interest may be an area that the consumer is prohibited from entering or an area in front of a shelf of a particular type of products. If the monitoring region is set inside a factory, then the area of interest may be a danger area where the equipment is installed inside the factory or a standby area for workers. If the monitoring region is a railway station, then the area of interest may be a railway or a ticket gate. As can be seen, the area of interest may be set as appropriate with respect to the monitoring region.

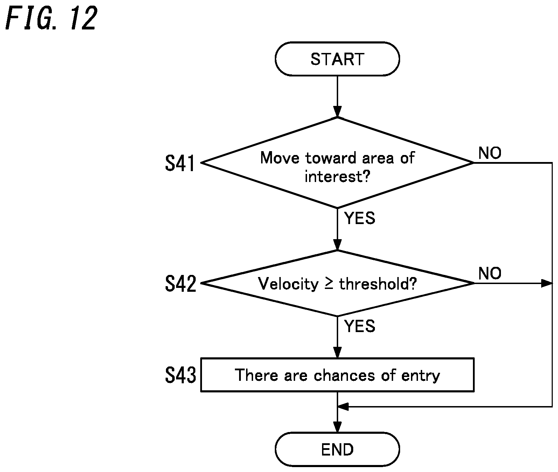

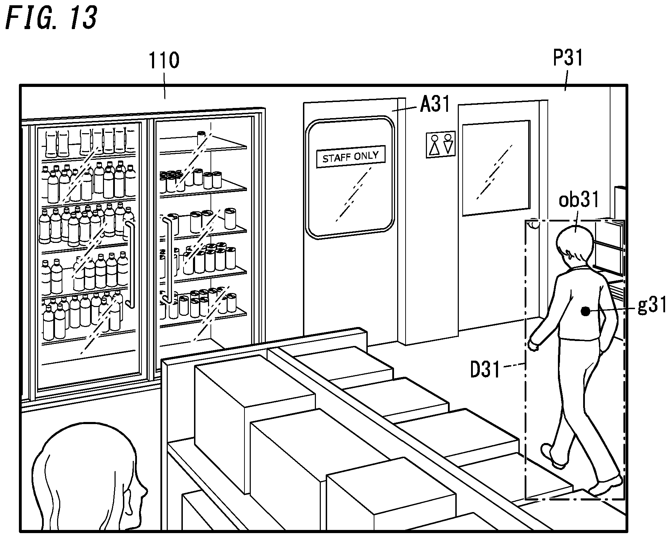

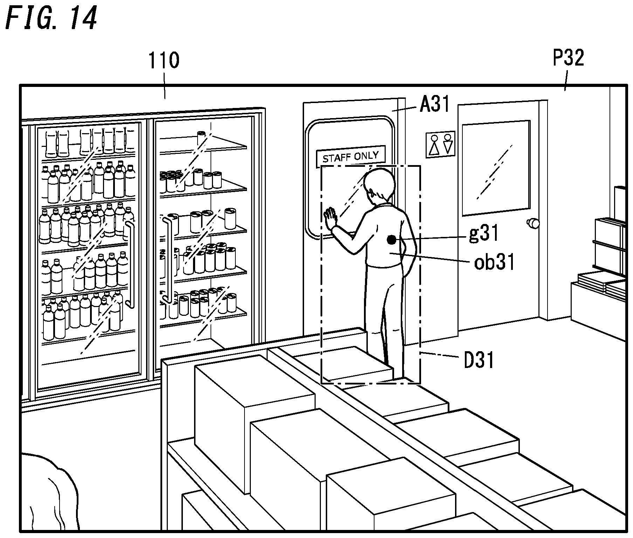

Next, it will be described with reference to FIGS. 12-14 how the entry decider 135 operates (i.e., how to perform the entry decision step S16). FIG. 12 is a flowchart showing how the entry decider 135 operates. FIGS. 13 and 14 illustrate images (luminance images) P31, P32 of the monitoring region 110. The image P32 is captured later than the image P31. The monitoring region 110 is set inside a store such as a convenience store. In the monitoring region 110, an area of interest A31 is set. The area of interest A31 is an area that no consumers are allowed to enter (such as a backyard) in the store. As for the images P31, P32, a target D31 corresponding to an object ob31 that is a person has been detected, and its center of gravity position g31 has been obtained, by the detector 132. When the target D31 is detected by the detector 132, the entry decider 135 determines whether the target D31 is moving toward the area of interest A31 (in S41). For example, the entry decider 135 obtains the distance from the image sensor 20 to the target D31. The entry decider 135 registers a combination of the distance from the image sensor 20 to the target D31 and the distance from the image sensor 20 to the area of interest A31 on a distance list. The entry decider 135 calculates, based on the combination of the distance from the image sensor 20 to the target D31 and the distance from the image sensor 20 to the area of interest A31, the distance from the target D31 to the area of interest A31. When the distance from the target D31 to the area of interest A31 is calculated, the center of gravity position g31 of the target D31 and a reference position in the area of interest A31 are used. The reference position in the area of interest A31 is a position which is set as appropriate to calculate the distance between the area of interest A31 and the target D31. For example, the reference position may be a center position of the area of interest A31 or a position closest to the target D31 on outer edges of the area of interest A31. When finding the distance between the target and the area of interest, which is obtained as the distance between the same combination of the target and the area of interest, decreasing with the passage of time, the entry decider 135 decides that the target should be moving toward the area of interest. In the images P31, P32, the distance between the target D31 and the area of interest A31 decreases with time, and therefore, the entry decider 135 decides that the target D31 should be moving toward the area of interest A31. If the target D31 is moving toward the area of interest A31 (if the answer is YES in S41), then the entry decider 135 determines whether the velocity of the target D31 moving toward the area of interest A31 is equal to or greater than a threshold value (in S42). The entry decider 135 calculates, based on the difference in the distances between the target D31 and the area of interest A31, the velocity of the target D31 moving toward the area of interest A31. In this case, the threshold value may be set as appropriate to determine whether there are any chances of the target D31 entering the area of interest A31. The threshold value may be changed as appropriate according to the attribute of the target D31. For example, the threshold value varies depending on whether the target D31 is a person or an automobile. When finding the velocity of the target D31 moving toward the area of interest A31 equal to or greater than the threshold value (if the answer is YES in S42), then the entry decider 135 decides that there should be some chances of the target D31 entering the area of interest A31 within the monitoring region 110 (in S43).

The entry decider 135 has obtained the distance between the target D31 and the area of interest A31, and therefore, may estimate, based on the distance, what the chances of the target D31 entering the area of interest A31 within the monitoring region 110 are and how long it would take for the target D31 to enter the area of interest A31. Depending on these chances or the estimated time, the chances of the target D31 entering the area of interest A31 may be presented in a different manner.

The correlation decider 136 determines the correlation between a plurality of targets (i.e., performs the correlation decision S17 shown in FIG. 1). In this embodiment, the correlation decider 136 determines, to find the correlation between a plurality of targets, whether there are any chances of the plurality of targets colliding against each other (contacting with each other). Alternatively, the correlation decider 136 may determine whether the plurality of targets have collided against each other. Determining whether there are chances of a plurality of targets colliding against each other (contacting with each other) would contribute to avoiding collision while commodities are transported in a warehouse or a store, confirming safe conditions in the forward/backward directions while movers (such as vehicles, electric carts, wheelchairs, strollers, and shopping carts) are moving, and avoiding collision at crossroads or corners.

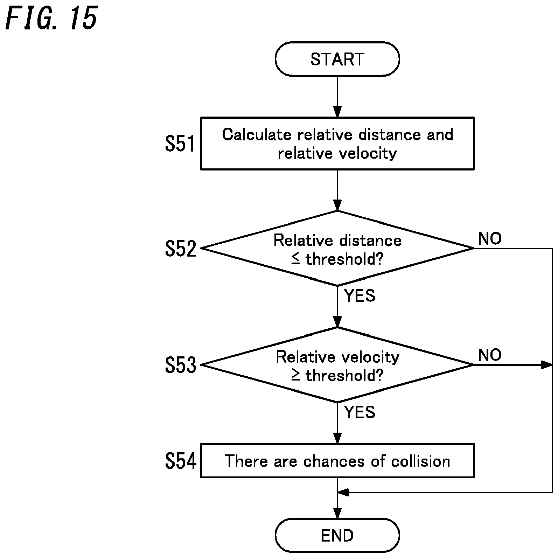

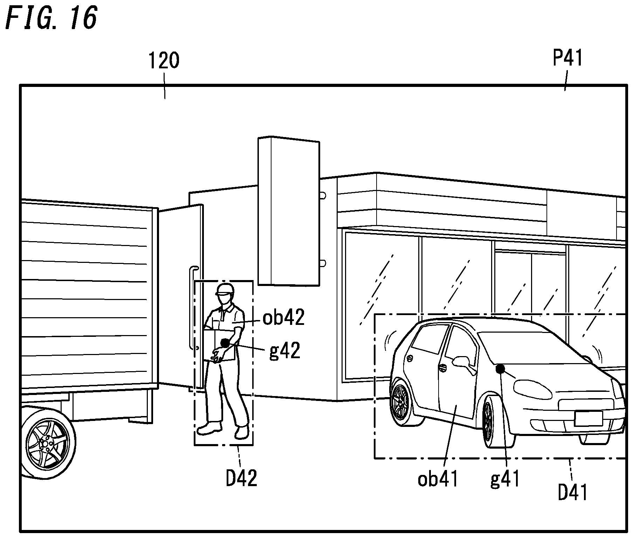

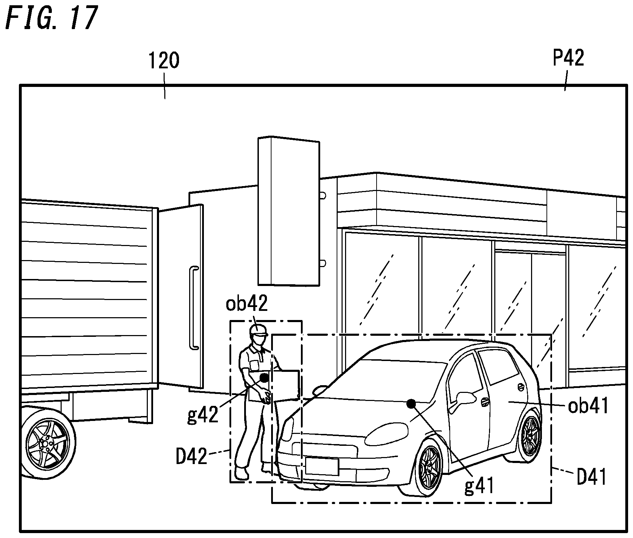

Next, it will be described with reference to FIGS. 15-17 how the correlation decider 136 operates (i.e., how to perform the correlation decision step S17). FIG. 15 is a flowchart showing how the correlation decider 136 operates. FIGS. 16 and 17 illustrate images (luminance images) P41, P42 of the monitoring region 120. The image P42 is captured later than the image P41. The monitoring region 120 is set outside a store such as a convenience store. As for the images P41, P42, a target D41 corresponding to an object ob41 that is a vehicle has been detected, and its center of gravity position g41 has been obtained, by the detector 132 and a target D42 corresponding to an object ob42 that is a person has been detected, and its center of gravity position g42 has been obtained, by the detector 132. When the targets D41, D42 are detected by the detector 132, the correlation decider 136 calculates a relative distance between the targets D41, D42 and their relative velocity (in S51). For example, the correlation decider 136 calculates, with respect to a combination of two different targets D41, D42, the distance (relative distance) between the two different targets D41, D42. The correlation decider 136 registers the distance thus calculated on a distance list associated with the combination of the two different targets D41, D42. In calculating the distance between the targets D41, D42, the correlation decider 136 uses the respective center of gravity positions g41, g42 of the targets D41, D42. The correlation decider 136 calculates the relative velocity of the targets D41, D42 based on the difference in distances between the targets D41, D42. The correlation decider 136 determines whether the relatively distance is equal to or less than a threshold value (distance threshold value) (in S52). In this case, the distance threshold value may be set as appropriate to determine whether there are any chances of collision between the targets D41, D42. The distance threshold value may be changed according to the combination of the respective attributes of a plurality of targets. For example, the distance threshold value in a situation where each of the plurality of targets is a person is different from the distance threshold value in a situation where at least one of the plurality of targets is an automobile. When finding the relative distance equal to or less than the threshold value (distance threshold value) (if the answer is YES in S52), the correlation decider 136 determines whether the relative velocity is equal to or greater than a threshold value (velocity threshold value) (in S53). In this case, the velocity threshold value may be set as appropriate to determine whether there are any chances of collision between the targets D41, D42. The velocity threshold value may be changed according to the combination of the respective attributes of a plurality of targets. For example, the velocity threshold value in a situation where each of the plurality of targets is a person is different from the velocity threshold value in a situation where at least one of the plurality of targets is an automobile. When finding the relative velocity equal to or greater than the threshold value (velocity threshold value) (if the answer is YES in S53), the correlation decider 136 decides that there should be chances of the plurality of targets D41, D42 colliding against each other within the monitoring region 120 (in S54).

The correlation decider 136 has already obtained the relative distance and relative velocity between the targets D41, D42. Thus, the correlation decider 136 may estimate, based on at least one of the relative distance or the relative velocity, what the chances of collision happening between the plurality of targets D41, D42 are and how soon the collision would happen. Depending on these chances and the estimated time, the chances of collision happening between the targets D41, D42 may be presented in a different way.

The presenter 137 presents the decisions made by the stay decider 133, the irregular movement decider 134, the entry decider 135, and the correlation decider 136 (i.e., the decisions made in the stay decision step S14, the irregular movement decision step S15, the entry decision step S16, and the correlation decision step S17) (in the presentation step S18 shown in FIG. 1). Thus, the presenter 137 performs the occurrence presentation step including presenting stay occurrence information (including first stay occurrence information and second stay occurrence information) about the occurrence of the target's stay. In addition, the presenter 137 also performs the end presentation step including presenting end-of-stay information (including first end-of-stay information and second end-of-stay information) about the end of the target's stay.

### (1-3) Operation

Next, it will be described briefly with reference to the flowchart of FIG. 1 how the information processing system 10 according to this embodiment operates. In the information processing system 10, the acquirer 131 acquires a distance image from the image sensor 20 via the signal processor 40 (in S11). Next, on detecting a target (if the answer is YES in S12), the detector 132 generates target information (in S13). The stay decider 133 performs a stay decision in accordance with the target information (in S14). The irregular movement decider 134 performs an irregular movement decision in accordance with the target information (in S15). The entry decider 135 performs an entry decision in accordance with the target information (in S16). The correlation decider 136 performs a correlation decision in accordance with the target information (in S17). Then, the presenter 137 presents the decisions made by the stay decider 133, the irregular movement decider 134, the entry decider 135, and the correlation decider 136 (in S18).

### (1-4) Recapitulation

As can be seen from the foregoing description, an information processing system 10 includes: a detector 132 that detects a target D11, D12 (see FIG. 4) based on a distance image of a monitoring region 100; and a stay decider 133 that makes a stay decision including determining whether any stay of the target D11, D12 has occurred. The stay decider 133 makes the decision about the stay of the target D 11, D 12 based on an index indicating a positional change of the target D11, D12 with the passage of time. This information processing system 10 makes it easier to improve the accuracy of a decision about the stay of a target.

In other words, it can be said that the information processing system 10 is performing the method shown in FIG. 1 (information processing method). The information processing method includes a detection step S12 including detecting a target D11, D12 (see FIG. 4) based on a distance image of a monitoring region 100; and a stay decision step S14 including making a stay decision. The stay decision includes determining whether any stay of the target D11, D12 has occurred. The stay decision step S14 includes making the decision about the stay of the target D11, D12 based on an index indicating a positional change of the target D11, D12 with the passage of time. This information processing method, as well as the information processing system 10, makes it easier to improve the accuracy of a decision about the stay of a target.

The information processing system 10 is implemented using a computer system. That is to say, the method to be performed by the information processing system 10 (the information processing method) may be carried out by making the computer system execute a program. This program is a computer program designed to cause one or more processors to perform the information processing method. Such a program, as well as the information processing system 10, makes it easier to improve the accuracy of a decision about the stay of a target.

Another information processing system 10 includes: a detector 132 that detects a target D31 (see FIG. 13) based on a distance image P31 (see FIG. 13) of a monitoring region 110 (see FIG. 13); and an entry decider 135 that makes a decision about the entry of the target D31 into an area of interest A31 within the monitoring region 110. This information processing system 10 makes it easier to improve the accuracy of a decision about the entry of a target.

In other words, it can be said that the information processing system 10 is performing the method shown in FIG. 1 (information processing method). The information processing method includes a detection step S12 including detecting a target D31 (see FIG. 13) based on a distance image P31 (see FIG. 13) of a monitoring region 110 (see FIG. 13); and an entry decision step S16 including making a decision about the entry of the target D31 into an area of interest A31 within the monitoring region 110. This information processing method, as well as the information processing system 10, makes it easier to improve the accuracy of a decision about the entry of a target.

The information processing system 10 is implemented using a computer system. That is to say, the method to be performed by the information processing system 10 (the information processing method) may be carried out by making the computer system execute a program. This program is a computer program designed to cause one or more processors to perform the information processing method. Such a program, as well as the information processing system 10, makes it easier to improve the accuracy of a decision about the entry of a target.

Still another information processing system 10 includes: a detector 132 that detects a target D41, D42 (see FIG. 14) based on a distance image P41 (see FIG. 14) of a monitoring region 120 (see FIG. 14); and a correlation decider 136 that determines a correlation between a plurality of the targets D41, D42. This information processing system 10 makes it easier to improve the accuracy of a decision about the correlation between a plurality of targets.

In other words, it can be said that the information processing system 10 is performing the method shown in FIG. 1 (information processing method). The information processing method includes a detection step S12 including detecting a target D41, D42 (see FIG. 14) based on a distance image P41 (see FIG. 14) of a monitoring region 120 (see FIG. 14); and a correlation decision step S17 including determining a correlation between the plurality of the targets D41, D42. This information processing method, as well as the information processing system 10, makes it easier to improve the accuracy of a decision about the correlation between a plurality of targets.

The information processing system 10 is implemented using a computer system. That is to say, the method to be performed by the information processing system 10 (the information processing method) may be carried out by making the computer system execute a program. This program is a computer program designed to cause one or more processors to perform the information processing method. Such a program, as well as the information processing system 10, makes it easier to improve the accuracy of a decision about the correlation between a plurality of targets.

### (2) Variations

Note that the embodiment described above is only an exemplary one of various embodiments of the present disclosure and should not be construed as limiting. Rather, the exemplary embodiment may be readily modified in various manners depending on a design choice or any other factor without departing from the scope of the present disclosure. Next, variations of the exemplary embodiment will be enumerated one after another. Note that the variations to be described below may be adopted in combination as appropriate.

In the embodiment described above, the information processing method is used to make a decision about a target present in a monitoring region that is set in a facility such as a convenience store. However, the facility does not have to be a convenience store. Note that the facility does not have to be one or more building but may also include a building and the premise where the building is located. Examples of the facility include dwelling houses (such as a single-family dwelling house and a multi-family dwelling house) and non-dwelling houses (such as factories, public parks, hospitals, commercial facilities, hotels, inns, amusement facilities, offices, and buildings). The amusement facilities may include sports facilities (including athletic stadiums, swimming pools, and skating rinks) and concert halls. Furthermore, the facility may also be an integrated resort facility which is a composite facility where a MICE facility including casinos, hotels, theaters, international conference halls, and exhibition halls and shopping malls are assembled together. In addition, the information processing method is applicable to not only those facilities but also moving vehicles such as automobiles. In this example, the moving vehicle is supposed to be an automobile to be driven by a human being. This information processing method is applicable to, for example, advanced driver assistance systems (ADAS), autonomous driving technologies, and driver monitoring technologies for moving vehicles. When the information processing method is applied to advanced driver assistance systems and autonomous driving technologies, the monitoring region may be set, for example, in a region surrounding the moving vehicle. In that case, examples of the objects (targets) include persons (including a pedestrian, a person who has stopped walking, a person who is sitting down, and a person who is riding a bicycle) and creatures such as small animals, and structures such as other moving vehicles, walls, guardrails, and traffic lights. Note that the moving vehicle equipped with the information processing system 10 does not have to be an automobile (four-wheeled vehicle) but may also be a two-wheeler, a railway train, an electric cart, a construction machine, a drone, an aircraft, or a watercraft, for example. Furthermore, the information processing system 10 does not have to be used in a moving vehicle but may also be installed at a fixed location indoors or outdoors for the purposes of surveying, crime prevention, or disaster prevention, for example.

In one variation, in the information processing system 10, the decisions may be made by the stay decider 133, the irregular movement decider 134, the entry decider 135, and the correlation decider 136 (in the stay decision step S14, the irregular movement decision step S15, the entry decision step S16, and the correlation decision step S17) in any order without limitation. Also, the decisions made by the irregular movement decider 134, the entry decider 135, and the correlation decider 136 (in the irregular movement decision step S15, the entry decision step S16, and the correlation decision step S17) are not essential ones for the information processing system 10. That is to say, in the information processing system 10, the decision has only to be made by the stay decider 133 (i.e., the stay decision step S14 has only to be performed). The stay decision step S14 does not have to include making a decision about any change in posture (S212) or making a decision about a condition of interest (S213). The stay decision step S14 does not have to include making a decision about any change in posture (S212) or making a decision about a condition of interest (S213). The stay decision step S14 does not have to include making a decision about a prolonged stay, for example (in S214, S221, S222, S223, S243, S251, S252, and S253).

In another variation, the stay decider 133 may remove a target, of which the stay occurred at least a prescribed amount of time ago, from the targets of stay decisions. For example, the stay decider 133 may compile a list of targets, of which the stay has occurred. The stay decider 133 removes a target, of which the stay occurred at least a prescribed amount of time ago, from the list. This enables efficiently cutting down the amount of information about targets, of which the stay has occurred.

In still another variation, the stay decider 133 may manage, on a disappearance list, any target, which is no longer detected by the detector 132 after a prolonged stay thereof has occurred. In step S201, the stay decider 133 may collate a target detected by the detector 132 with the disappearance list. If a target on the disappearance list and the target detected by the detector 132 satisfy a predetermined condition, then the target on the disappearance list and the target detected by the detector 132 may be regarded as the same target. This enables, even if an overlap between one object corresponding to a target, of which a prolonged stay has occurred, and another object prevents the detector 132 from detecting the former object, securing the identity of the object. The predetermined condition may include a first condition and a second condition. That is to say, if the first condition and the second condition are both satisfied, then a decision is made that the predetermined condition should be satisfied. The first condition is that the volume ratio of a target on the list to the target detected by the detector 132 should fall within a predetermined range. The predetermined range may be, for example, a range from 0.9 to less than 1.1. The second condition is a condition that the distance between the center of gravity position of a target on the list and the center of gravity position of the target detected by the detector 132 should be equal to or less than a predetermined value. The predetermined value may be 500 mm, for example.

In still another variation, the stay decider 133 may manage, on a prolonged stay list, a target which has been determined to have stayed for a long time. The stay decider 133 may collate such a target, which has been determined to have stayed for a long time, with the prolonged stay list. When finding such a target, which has been determined to have stayed for a long time, not registered on the prolonged stay list, the stay decider 133 newly registers such a target, which has been determined to have stayed for a long time, on the prolonged stay list. On the other hand, when finding such a target, which has been determined to have stayed for a long time, already registered on the prolonged stay list, the stay decider 133 updates the information about the targets registered on the prolonged stay list. For example, the stay decider 133 sets the time when the target registered on the prolonged stay list resumes moving at the time when such a target, which has been determined to have stayed for a long time, started its prolonged stay. On the other hand, when finding the velocity of such a target, which has been determined to have stayed for a long time, greater than a prescribed value (e.g., 0.1 m/s), the stay decider 133 decides that the target should be moving.

In yet another variation, the end-of-stay information may include information in a different mode than the stay occurrence information. For example, if the stay occurrence information includes a still picture concerning the stay but includes no moving picture concerning the stay, then the end-of-stay information may include both a still picture and a moving picture concerning the end of the stay. That is to say, when a stay occurs, a decision may be made, even with a still picture, that the stay should have occurred. On the other hand, when the stay comes to an end, it is easier to recognize the situation using a moving picture rather than using a still picture.

The information processing system 10 according to the present disclosure includes a computer system. The computer system includes, as principal hardware components, a processor and a memory. The functions of the information processing system 10 according to the present disclosure may be performed by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits include a system LSI, a very-large-scale integrated circuit (VLSI), and an ultra-large-scale integrated circuit (ULSI). Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

In the embodiment described above, at least some functions of the information processing system 10 are aggregated together in a single housing. However, this is not an essential configuration for the information processing system 10. Alternatively, those constituent elements of the information processing system 1 may be distributed in multiple different housings. For example, among the constituent elements of the information processing system 10, the detector 132 may be provided in a different housing from the stay detector 133. Still alternatively, at least some functions of the information processing system 10 may be implemented as a cloud computing system as well.

Conversely, the plurality of functions distributed in multiple devices in the first embodiment may be aggregated together in a single housing. For example, the functions distributed in the information processing system 1 and the signal processor 5 may be aggregated together in a single housing.

Furthermore, when presenting various types of information, the presenter 137 does not have to output the various types of information to an image display device. For example, the presenter 137 may output the various types of information to a controller or output the information by, for example, transmitting the information to a mobile communications device, displaying the information, emitting a sound (including a voice message), recording (writing) the information on a non-transitory storage medium, or printing out the information.

Furthermore, the distance image does not have to be obtained by the method using intensity-modulated light. Alternatively, the distance image may be obtained simply based on the time it takes for the second pixel of the image sensor 20 to receive light (infrared light) since the light has been emitted from the light-emitting device 30.

Furthermore, the image sensor 20 and the signal processor 40 and/or the signal processor 40 and the information processing system 10 do not have to be directly connected to each other but only need to be ready to communicate with each other. As used herein, if one device is "ready to communicate" with another device, it means that signals may be transmitted and received between the two devices by an appropriate communication method that is either wired communication or wireless communication either directly or indirectly via a network or a relay, for example.

### (3) Aspects

As can be seen from the foregoing description of embodiments and their variations, the present disclosure has the following aspects. In the following description, reference signs are inserted in parentheses just for the sake of clarifying correspondence in constituent elements between the following aspects of the present disclosure and the exemplary embodiments described above. Note that in the following description, the set of reference signs D11, D12, D13, D140, D141, D31, D41, and D42 will be hereinafter collectively referred to as "D11-D42" to avoid redundancy.

A first aspect is an information processing method, which includes a detection step (S12) including detecting a target (D11-D42) based on a distance image of a monitoring region (100, 110, 120); and a stay decision step (S14) including making a stay decision. The stay decision includes determining whether any stay of the target (D 11-D42) has occurred. The stay decision step (S14) includes determining, based on an index indicating a positional change of the target (D11-D42) with passage of time, whether any stay of the target (D11-D42) has occurred. This aspect makes it easier to improve the accuracy of a decision about the stay of a target.

A second aspect is an information processing method which may be implemented in conjunction with the first aspect. In the first aspect, the index includes a velocity of the target (D1 1-D42). This aspect makes it even easier to improve the accuracy of a decision about the stay of a target.

A third aspect is an information processing method which may be implemented in conjunction with the first or second aspect. In the third aspect, identification information is assigned to the target (D1 1-D42). This aspect makes it even easier to improve the accuracy of a decision about the stay of a target.

A fourth aspect is an information processing method which may be implemented in conjunction with the third aspect. In the fourth aspect, the stay decision is made with respect to the target (D11-D42) to which the identification information is assigned. This aspect enables making a stay decision on a target-by-target basis.

A fifth aspect is an information processing method which may be implemented in conjunction with any one of the first to fourth aspects. In the fifth aspect, the stay decision includes a decision about a degree of the stay of the target (D11-D42). This aspect enables determining how long the stay of the target has lasted.

A sixth aspect is an information processing method which may be implemented in conjunction with any one of the first to fifth aspects. In the sixth aspect, the information processing method further includes a stay occurrence information generation step (S223) including confirming, based on a result of the stay decision, that the stay of the target (D1 1-D42) has occurred to generate stay occurrence information about a stay occurrence period including a time of occurrence of the stay of the target (D1 1-D42). The stay occurrence period includes at least a period preceding the time of occurrence of the stay of the target (D1 1-D42). This aspect enables outputting information about the occurrence of the stay of the target.

A seventh aspect is an information processing method which may be implemented in conjunction with the sixth aspect. In the seventh aspect, the stay occurrence information includes a stay occurrence moving picture (M11). The stay occurrence moving picture (M11) is a moving picture constituted of a group of luminance images, included in the stay occurrence period, out of a group of time-series luminance images of the monitoring region (100). This aspect enables outputting a moving picture concerning the occurrence of the stay of the target.

An eighth aspect is an information processing method which may be implemented in conjunction with any one of the first to fifth aspects. In the eighth aspect, the information processing method further includes an occurrence presentation step (S 18) including confirming, based on a result of the stay decision, that the stay of the target (D11-D42) has occurred to present stay occurrence information about the occurrence of the stay of the target (D11-D42). This aspect enables presenting information about the occurrence of the stay of the target.

A ninth aspect is an information processing method which may be implemented in conjunction with the eighth aspect. In the ninth aspect, the stay occurrence information includes an image concerning the stay of the target (D11-D42). This aspect enables presenting an image concerning the occurrence of the stay of the target.

A tenth aspect is an information processing method which may be implemented in conjunction with any one of the sixth to ninth aspects. In the tenth aspect, the stay decision includes determining (S241, S242) whether the stay of the target (D11-D42) has ended. This aspect makes it easier to improve the accuracy of a decision about the stay of a target.

An eleventh aspect is an information processing method which may be implemented in conjunction with the eighth aspect. In the eleventh aspect, the information processing method further includes an end-of-stay information generation step (S253) including confirming, based on a result of the stay decision, that the stay of the target (D1 1-D42) has ended to generate end-of-stay information about an end-of-stay period including an ending time of the stay of the target (D1 1-D42). The end-of-stay period includes at least a period preceding the ending time of the stay of the target (D1 1-D42). This aspect enables outputting information about the end of the stay of the target.

A twelfth aspect is an information processing method which may be implemented in conjunction with the eleventh aspect. In the twelfth aspect, the end-of-stay information includes an end-of-stay moving picture (M12). The end-of-stay moving picture (M12) is a moving picture constituted of a group of luminance images, included in the end-of-stay period, out of a group of time-series luminance images of the monitoring region (100). This aspect enables outputting a moving picture concerning the end of the stay of the target.

A thirteenth aspect is an information processing method which may be implemented in conjunction with the tenth aspect. In the thirteenth aspect, the information processing method further includes an end presentation step (S 18) including confirming, based on a result of the stay decision, that the stay of the target (D11-D42) has ended to present end-of-stay information about the end of the stay of the target (D11-D42). This aspect enables presenting information about the end of the stay of the target.

A fourteenth aspect is an information processing method which may be implemented in conjunction with the thirteenth aspect. In the fourteenth aspect, the end-of-stay information includes information in a different mode from the stay occurrence information. This aspect enables presenting information about the occurrence of the stay of the target and information about the end of the stay of the target in respectively suitable modes.

A fifteenth aspect is an information processing method which may be implemented in conjunction with any one of the first to fourteenth aspects. In the fifteenth aspect, the information processing method further includes an entry decision step (S16) including making a decision about entry of the target (D31) into an area of interest (A31) within the monitoring region (100, 110, 120). This aspect enables making a decision about the chances of the target (D31) entering the area of interest (A31).

A sixteenth aspect is an information processing method which may be implemented in conjunction with any one of the first to fifteenth aspects. In the sixteenth aspect, the information processing method further includes a correlation decision step (S17) including determining a correlation between a plurality of the targets (D41, D42). This aspect enables making a decision about the chances of a plurality of targets (D41, D42) colliding against each other.

A seventeenth aspect is an information processing method which may be implemented in conjunction with any one of the first to sixteenth aspects. In the seventeenth aspect, the information processing method further includes an estimation step (S212) including estimating a posture of the target (D11-D42) based on a center of gravity height of the target (D11-D42). This aspect enables estimating the posture of the target (D11-D42).

An eighteenth aspect is a program which is designed to cause one or more processors to perform the information processing method according to any one of the first to seventeenth aspects. This aspect makes it easier to improve the accuracy of a decision about the stay of a target (D11-D42).

A nineteenth aspect is an information processing system (10) which includes: a detector (132) that detects a target (D1 1-D42) based on a distance image of a monitoring region (100, 110, 120); and a stay decider (133) that makes a stay decision including determining whether any stay of the target (D11-D42) has occurred. The stay decider (133) makes the decision based on an index indicating a positional change of the target with passage of time. This aspect makes it easier to improve the accuracy of a decision about the stay of a target (D11-D42).

Note that the features according to the second to seventeenth aspects are not essential features for the information processing method but may be omitted as appropriate. Also, the features according to the second to seventeenth aspects are applicable as appropriate to the information processing system (10) according to the nineteenth aspect.

### Reference Signs List

- 10: Information Processing System
- 132: Detector
- 133: Stay Decider
- 100, 110, 120: Monitoring Region
- D11, D12, D13, D140, D141: Target
- D21: Target
- D31: Target
- D41, D42: Target
- A31: Area of Interest
- S12: Detection Step
- S14: Stay Decision Step
- S16: Entry Decision Step
- S17: Correlation Decision Step
- S18: Presentation Step (Occurrence Presentation Step, End Presentation Step)
- S212: Step (Estimation Step)
- S223: Step (Stay Occurrence Information Generation Step)
- S241, S242: Step (End-of-Stay Decision)
- S253: Step (End-of-Stay Information Generation Step)
- M11: Stay Occurrence Moving Picture
- M12: End-of-Stay Moving Picture

## Claims

1. An information processing method comprising:
a detection step including detecting a target based on a distance image of a monitoring region; and
a stay decision step including making a stay decision, the stay decision including determining whether any stay of the target has occurred,
the stay decision step including making the decision based on an index indicating a positional change of the target with passage of time.

2. The information processing method of claim 1, wherein
the index includes a velocity of the target.

3. The information processing method of claim 1 or 2, wherein
identification information is assigned to the target.

4. The information processing method of claim 3, wherein
the stay decision is made with respect to the target to which the identification information is assigned.

5. The information processing method of any one of claims 1 to 4, wherein
the stay decision includes a decision about a degree of the stay of the target.

6. The information processing method of any one of claims 1 to 5, further comprising a stay occurrence information generation step including confirming, based on a result of the stay decision, that the stay of the target has occurred to generate stay occurrence information about a stay occurrence period including a time of occurrence of the stay of the target, wherein
the stay occurrence period includes at least a period preceding the time of occurrence of the stay of the target.

7. The information processing method of claim 6, wherein
the stay occurrence information includes a stay occurrence moving picture, and
the stay occurrence moving picture is a moving picture constituted of a group of luminance images, included in the stay occurrence period, out of a group of time-series luminance images of the monitoring region.

8. The information processing method of any one of claims 1 to 5, further comprising an occurrence presentation step including confirming, based on a result of the stay decision, that the stay of the target has occurred to present stay occurrence information about the occurrence of the stay of the target.

9. The information processing method of claim 8, wherein
the stay occurrence information includes an image concerning the stay of the target.

10. The information processing method of any one of claims 6 to 9, wherein
the stay decision includes determining whether the stay of the target has ended.

11. The information processing method of claim 8, further comprising an end-of-stay information generation step including confirming, based on a result of the stay decision, that the stay of the target has ended to generate end-of-stay information about an end-of-stay period including an ending time of the stay of the target, wherein
the end-of-stay period includes at least a period preceding the ending time of the stay of the target.

12. The information processing method of claim 11, wherein
the end-of-stay information includes an end-of-stay moving picture, and
the end-of-stay moving picture is a moving picture constituted of a group of luminance images, included in the end-of-stay period, out of a group of time-series luminance images of the monitoring region.

13. The information processing method of claim 10, further comprising an end presentation step including confirming, based on a result of the stay decision, that the stay of the target has ended to present end-of-stay information about the end of the stay of the target.

14. The information processing method of claim 13, wherein
the end-of-stay information includes information in a different mode from the stay occurrence information.

15. The information processing method of any one of claims 1 to 14, further comprising an entry decision step including making a decision about entry of the target into an area of interest within the monitoring region.

16. The information processing method of any one of claims 1 to 15, further comprising a correlation decision step including determining a correlation between a plurality of the targets.

17. The information processing method of any one of claims 1 to 16, further comprising an estimation step including estimating a posture of the target based on a center of gravity height of the target.

18. A program designed to cause one or more processors to perform the information processing method of any one of claims 1 to 17.

19. An information processing system comprising:
a detector configured to detect a target based on a distance image of a monitoring region; and
a stay decider configured to make a stay decision including determining whether any stay of the target has occurred,
the stay decider being configured to make the decision based on an index indicating a positional change of the target with passage of time.
